**Europäisches Patentamt**

**European Patent Office**

**Office européen des brevets**

(19)

(11) Veröffentlichungsnummer : **0 048 682**
**B1**

(12) # EUROPÄISCHE PATENTSCHRIFT

(45) Veröffentlichungstag der Patentschrift :
02.01.86

(51) Int. Cl.⁴ : **H 02 B   1/12**

(21) Anmeldenummer : **81730084.1**

(22) Anmeldetag : **01.09.81**

(54) **Druckfestes Gehäuse mit einem rechteckigen Deckel.**

(30) Priorität : **19.09.80 DE 3035835**

(43) Veröffentlichungstag der Anmeldung :
**31.03.82 Patentblatt 82/13**

(45) Bekanntmachung des Hinweises auf die Patenterteilung : **02.01.86 Patentblatt 86/01**

(84) Benannte Vertragsstaaten :
**FR GB**

(56) Entgegenhaltungen :
**DE-B- 2 243 263**
**DE-C-   626 189**
**FR-A- 1 040 247**
**GB-A-   932 554**

(73) Patentinhaber : **Siemens Aktiengesellschaft**
**Berlin und München Wittelsbacherplatz 2**
**D-8000 München 2 (DE)**

(72) Erfinder : **Pollerspöck, Kurt**
**Schuckertdamm 328**
**D-1000 Berlin 13 (DE)**

EP 0 048 682 B1

Jouve, 18, rue St-Denis, 75001 Paris, France

## Beschreibung

Die Erfindung betrifft ein druckfestes Gehäuse von quaderförmiger Gestalt zur schlagwetter- oder explosionssicheren Kapselung elektrischer Geräte, mit einer rechteckigen Öffnung und einem gleichfalls rechteckigen, an Schwenkarmen verschiebbar und schwenkbar gehaltenen Deckel, wobei am Rand des Deckels und am Rand der Öffnung Verschlußelemente mit korrespondierendem Profil angebracht sind, die sich zur Verriegelung der Deckels in der Schließstellung bei seiner Verschiebung an allen vier Seitenkanten annähernd gleichzeitig hintergreifen.

Ein druckfestes Gehäuse dieser Art ist z. B. durch die DE-B-2 243 263 bekannt geworden. Die Verriegelung des Deckels erfolgt dabei an zwei gegenüberliegenden Seitenkanten mittels durchgehender Leisten und an den beiden weiteren gegenüberliegenden Seitenkanten bajonettartig durch eine Vielzahl einander hintergreifender Klauen. Zum Schließen und Öffnen wird der Deckel geradlinig entlang einer der Kanten verschoben.

Der Erfindung liegt die Aufgabe zugrunde, ausgehend von einem druckfesten Gehäuse der eingangs genannten Art einen an allen vier Seitenkanten des Deckels wirksamen Verschluß bei einfacherer Gestalt der Verschlußelemente zu schaffen.

Gemäß der Erfindung wird diese Aufgabe bei einem druckfesten Gehäuse der eingangs genannten Art dadurch gelöst, daß jeweils zwei rechtwinklig zueinander stehende, schienenförmige Verschlußelemente von einem Eckpunkt der Öffnung und einem Eckpunkt der Öffnung und einem diesem Eckpunkt diagonal gegenüberliegenden Eckpunkt des Deckels ausgehend angeordnet sind, derart, daß die Verriegelung des Deckels durch entweder diagonale oder in der Summe ihrer Teilbewegungen diagonale Verschiebung erfolgt.

Hierbei ist wesentlich, daß an allen vier Seitenkanten Verschlußelemente gleichbleibenden Querschnitts verwendbar sind, so daß der bisher erforderliche Aufwand für die mechanische Bearbeitung der zahlreichen Klauen des Deckels und des Gehäuses entfallen kann.

Im Rahmen der Erfindung kann an der Öffnung und an dem Deckel jeweils ein aus Leisten gebildeter Rahmen angeordnet sein und die schienenförmigen Verschlußelemente können ein U-förmiges Profil zum Übergreifen der Leisten der Rahmen aufweisen. Hierdurch wird erreicht, daß die U-förmigen Verschlußelemente praktisch alle auftretenden Kräfte aufnehmen, so daß sich ein direkter Kraftfluß von dem einen Rahmen über das U-förmige Verschlußelement und den weiteren Rahmen ergibt. Die Verbindungselemente, mit denen die U-förmigen Verschlußelemente an dem Rahmen der Gehäuseöffnung bzw. an dem Deckel befestigt sind, sind keiner Beanspruchung durch den Explosionsdruck ausgesetzt.

Die zum Öffnen und Schließen des Deckels vorgesehene diagonale Verschiebung läßt sich auf unterschiedliche Weise bewirken. Insbesondere kann sie dadurch erreicht werden, daß die erwähnten Schwenkarme in einer gemeinsamen Tragstange gelagert sind, die über Lenkhebel mit dem Gehäuse verbunden sind, und daß die Tragstange durch einen Betätigungshebel unter gleichzeitiger seitlicher Verschiebung anhebbar ist. Die seitliche Verschiebung ergibt sich bei geeigneter Wahl der Ausgangsstellung der Lenkhebel zwangsläufig und erfordert somit keinen zusätzlichen Mechanismus. Dabei ist es unwesentlich, daß der Endpunkt der Verschiebung des Deckels je nach Anordnung und Form der Lenkhebel entlang einer Kurve statt auf einer Geraden erfolgt.

Zur Entlastung des Betätigungshebels in der Offenstellung des Deckels kann in der Tragstange der Schwenkarme eine Ausnehmung für das Eingreifen eines an dem Gehäuse gelagerten und gegen die Kraft einer Feder verschiebbaren Rastbolzens vorgesehen sein. Der Rastbolzen tritt in die Ausnehmung ein, sobald der Deckel um ein zur Lösung von dem Gehäuse erforderliches Maß verschoben worden ist.

Der erwähnte Betätigungshebel kann an der Tragstange gelagert und als Winkelhebel ausgebildet sein, dessen einer Hebelarm kurz gegenüber dem anderen von Hand zu bedienenden Hebelarm ist und mit einem gehäuseseitigen Widerlager zusammenwirkt. Beim Öffnen des Deckels führt der kurze Hebelarm des Betätigungshebels auf dem gehäuseseitigen Widerlager eine seitliche Gleitbewegung aus. Die Erfahrung zeigt, daß diese für den Öffnungsvorgang nicht hinderlich ist. Durch das Hebelverhältnis ist ohne weiteres zu erreichen, daß auch verhältnismäßig schwere Deckel, deren Gewicht zwischen 100 und 200 kg betragen kann, mit mäßigem Kraftaufwand zu öffnen sind.

Zum Schließen des Deckels kann ein von Hand zu bedienender Auslösehebel an der Tragstange gelagert sein, der eine Verschiebung des Rastbolzens entgegen der diesem zugeordneten Feder und der Reibungskräfte erlaubt. Bei der Betätigung des Auslösehebels gelangt der Deckel unter dem Einfluß der Schwerkraft selbsttätig in seine Schließstellung. Dies stellt eine wesentliche Erleichterung gegenüber bekannten Gehäuseverschlüssen dar, zu deren Betätigung erhebliche Kräfte erforderlich sein können.

Der gesonderte Auslösehebel ist entbehrlich, wenn nach einer Weiterbildung der Erfindung der Betätigungshebel mit einer Nase versehen wird, die in der angehobenen, der Offenstellung des Deckels entsprechenden Lage des Betätigungshebels dem Rastbolzen gegenübersteht. Die Freigabe des Deckels geschieht dann sinngemäß durch Niederdrücken des Betätigungshebels.

Will man vermeiden, daß der Deckel zufällig, z. B. in der vom Gehäuse weggeschwenkten Stellung, ausgelöst wird, so läßt sich dies dadurch erreichen, daß der Betätigungshebel an seiner an der Tragstange befindlichen Lagerstelle um mindestens den beim Öffnen und Schließen auftretenden seitlichen Versatz der Tragstange verschiebbar ist und daß das gehäuseseitige Widerlager einen die Mitnahme des Betätigungshebels beim Öffnen begrenzenden Anschlag besitzt. Der Anschlag bewirkt ein Stehenbleiben des Betätigungshebels bei der seitlichen Verschiebung der Tragstange. Erst durch einen zusätzlichen Arbeitsgang, nämlich die von Hand vorzunehmende Verschiebung des Betätigungshebels in Richtung der Tragstange, wird die Nase des Betätigungshebels wieder in die Nähe des Rastbolzens gebracht, der dann eingedrückt werden kann.

Die Erfindung wird im folgenden anhand der in den Figuren dargestellten Ausführungsbeispiele näher erläutert.

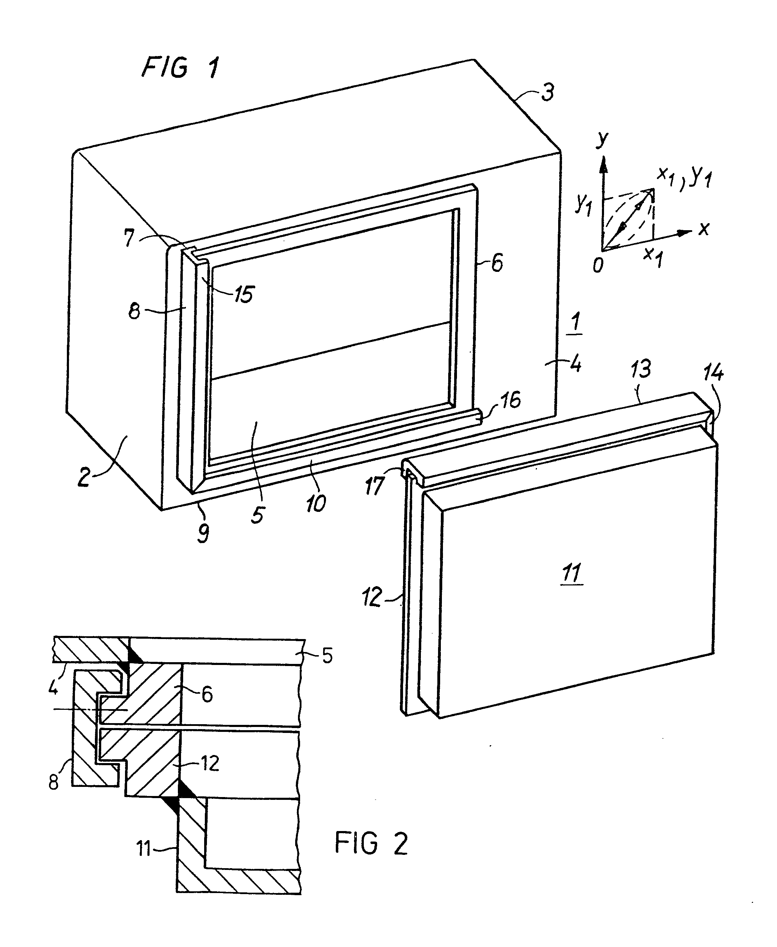

Die Fig. 1 zeigt in perspektivischer Darstellung ein druckfestes Gehäuse mit rechteckiger Öffnung und einem ebenfalls rechteckigen Deckel.

Ein Schnitt durch den Deckel und das Gehäuse am Rand der Öffnung zeigt die Fig. 2.

Die Fig. 3 zeigt ein druckfestes Gehäuse mit Deckel in einer Frontansicht mit den zur Halterung des Deckels sowie zum Öffnen und Schließen dienenden Teilen.

Die Fig. 4, 5 und 6 sind Seitenansichten des Gehäuses gemäß der Fig. 2 zur näheren Darstellung eines Betätigungshebels und eines Auslösehebels für den Deckel.

In den Fig. 7, 8 und 9 ist ebenfalls in Seitenansichten eine andere Ausführungsform eines Betätigungshebels gezeigt.

Die Fig. 10 und 11 zeigen in vergrößerter Darstellung Einzelheiten einer gegenüber den Fig. 7 bis 9 abgewandelten Einrichtung zum Öffnen und Schließen des Deckels.

Das in der Fig. 1 gezeigte quaderförmige druckfeste Gehäuse 1 dient zur Unterbringung elektrischer Schaltgeräte, wie man sie beispielsweise zum Betrieb elektromotorischer Antriebe im Bergbau unter Tage benötigt. Die Darstellung zeigt nur den eigentlichen druckfesten Raum. Die zum Aufbau einer vollständigen Schaltstation oder Verteilungsanlage noch benötigten Anschlußkästen, die üblicherweise den Seitenwänden 2 und 3 zugeordnet werden, sowie die Einbaugeräte und die zur Aufstellung benötigten Kufen und weiteres Zubehör sind fortgelassen.

Das vorzugsweise in geschweißter Ausführung hergestellte Gehäuse 1 besitzt an seiner Vorderseite 4 eine rechteckige Öffnung 5 als Zugang zum Gehäuseinneren beim Einbau der Geräte und bei deren späterer Wartung. Die Öffnung 5 ist von einem Rahmen 6 umgeben, der aus Leisten mit rechtwinkligem Profil besteht. Zwischen der Rückseite des Rahmens 6 und der Vorderwand 4 des Gehäuses 1 ist daher ein Zwischenraum vorhanden, in den ein Schenkel 7 einer Verschlußschiene 8 mit U-förmigem Profil eingreift. In dieser Stellung ist die Verschlußschiene 8 an dem Rahmen 6 durch Schrauben oder andere geeignete Mittel starr befestigt. Eine weitere Verschlußschiene 10 ist ebenso ausgebildet wie die Verschlußschiene 8 und in der angegebenen Weise im rechten Winkel zur Schiene 8 an dem Rahmen 6 befestigt. Wie die Fig. 1 zeigt, sind die Verschlußschienen 8 und 10 der linken und der unteren Kante der Öffnung 5 zugeordnet und erstrecken sich somit parallel zu der Seitenwand 2 und der Unterwand 9 des Gehäuses 1.

Der in der Fig. 1 gleichfalls gezeigte rechteckige Deckel 11 besitzt an seiner der Öffnung 5 zugewandten Seite einen dem gehäuseseitigen Rahmen 6 entsprechenden Rahmen 12 aus rechtwinkligen Leisten. Dieser Rahmen wird oben und rechts von Verschlußschienen 13 und 14 übergriffen, die mit dem Deckel starr verbunden sind. Der in der Fig. 2 gezeigte Schnitt durch den Deckel und das Gehäuse im Bereich des Randes der Öffnung 5 läßt erkennen, daß die Verschlußschiene 8 die Rahmen 6 und 12 des Gehäuses 1 und des Deckels 11 übergreift. Die strichpunktiert angedeuteten Befestigungsmittel, mit denen die Verschlußschienen an den Rahmen befestigt sind, unterliegen dabei nur einer geringen Beanspruchung, weil die Hauptlast, die bei einer Explosion im Inneren des Gehäuses auftritt, von den Verschlußschienen selbst aufgenommen wird. Daher verhalten sich die Verschlußschienen mit U-förmigem Profil günstiger als solche mit Rechteckprofil, deren Verbindung mit dem Rahmen einen größeren Aufwand erfordert.

Die Ausführung der Verschlußschienen mit U-Profil ist auch vorteilhaft für die Einhaltung des Schutzspaltes zwischen den Rahmen 6 und 12, der im geschlossenen Zustand gemäß den Vorschriften für die Schutzart « druckfeste Kapselung » höchstens 0,4 mm betragen darf.

Durch die Anbringung der Verschlußschienen 8 und 10 sowie 13 und 14 derart, daß sie von diagonal gegenüberliegenden Eckpunkten der Öffnung 5 und des Deckels 11 ausgehen, ist die Möglichkeit geschaffen, den Deckel trotz der Verwendung durchgehender Verschlußelemente mit dem Gehäuse gleichzeitig an allen vier Seiten zu verbinden oder zu lösen.

Zur Veranschaulichung der hierzu erforderlichen Bewegung ist in der Fig. 1 ein Koordinatensystem mit den Achsen x und y eingetragen, die der Richtung der Seitenwände 2 und 3 bzw. der Richtung der Unterwand 9 und der gegenüberliegenden Oberwand des Gehäuses 1 entsprechen. In seine Schließstellung gelangt der Deckel 11, nachdem er in eine parallele Lage zur Vorderwand 4 des Gehäuses 1 gebracht worden ist, ausgehend von einem Punkt $x_1$, $y_1$ durch Verschiebung in den Nullpunkt 0 des Koordinatensystems. Die Abstände $x_1$ und $y_1$ entsprechen dabei mindestens der Tiefe des U-Profils der Verschlußschienen 8 und 10 an der Öffnung 5 sowie der entsprechenden Verschlußschienen 13 und 14 des Deckels 11, z. B. 6-10 mm. Wie man erkennt, ist es dabei unerheblich, ob die Bewegung geradlinig zum Nullpunkt oder entlang einer der gestrichelt eingezeichneten Kurven erfolgt. Daher kann der Deckel z. B. auch zuerst entlang der x-Achse und dann entlang der y-Achse verschoben werden.

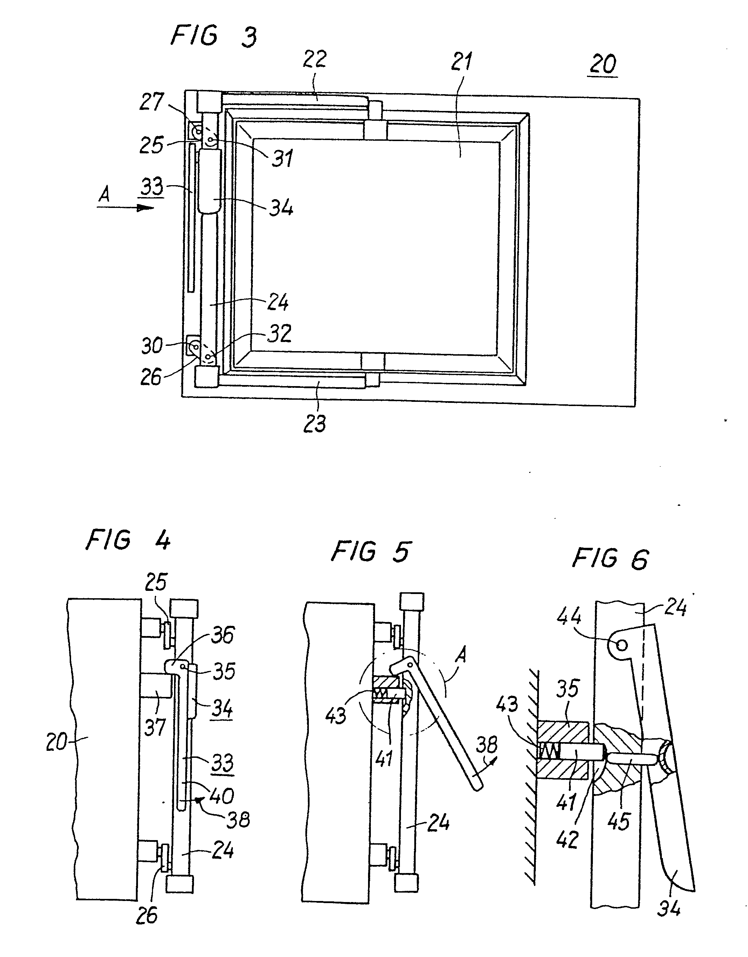

Ein zweckmäßiger Mechanismus zur gelenkigen Halterung des Deckels 11 sowie zum Öffnen und Schließen ist in den Fig. 3 bis 6 gezeigt. Das druckfeste Gehäuse 20 in Fig. 3 besitzt wiederum einen rechteckigen Deckel 21, der an Schwenkarmen 22 und 23 gehalten ist, die an den Enden einer gemeinsamen vertikalen Tragstange 24 schwenkbar gelagert sind. Schwenklager sind auch zur Verbindung der Tragarme 22 und 23 mit dem Deckel 21 vorgesehen, so daß sich der Deckel 21 raumsparend in paralleler Stellung zur Frontseite des druckfesten Gehäuses 20 von diesem abschwenken läßt. Die Tragstange 24 ist mit dem druckfesten Gehäuse mittels zweier Lenkhebel 25 und 26 verbunden, die in der gezeigten geschlossenen Stellung des Deckels 21 unter einem Winkel von etwa 45° nach unten stehen. Da sich die gehäuseseitigen Lagerstellen 27 und 30 der Lenkhebel 25 und 26 auf der dem Deckel 21 abgewandten Seite der Tragstange 24 sowie oberhalb der an der Tragstange vorgesehenen Lagerstellen 31 und 32 befinden, wird der Deckel 21 beim Anheben der Tragstange 24 zwangsläufig nach rechts und nach oben verschoben. Auf diese Weise entsteht die zusammengesetzte Bewegung zum Öffnen und Schließen des Deckels, wie sie anhand der Fig. 1 erläutert wurde.

Zum Öffnen und Schließen des Deckels dienen ein Betätigungshebel 33 und ein Entriegelungshebel 34, die in der Fig. 2 in der Frontansicht und in den Fig. 3, 4 und 5 in der Seitenansicht gezeigt sind. Der Betätigungshebel 33 its als Winkelhebel ausgebildet, dessen Lagerstelle 35 an der Tragstange 24 vorgesehen ist. Der kurze Hebelarm 36 des Betätigungshebels 33 liegt auf einem an dem Gehäuse 20 befestigten Widerlager 37 auf, während der längere Hebelarm 40 in der gezeigten Schließstellung des Deckels 21 eine senkrechte, d. h. etwa parallel zu der Tragstange 24 verlaufende Stellung einnimmt. Durch Anheben des Betätigungshebels 33 in Richtung des Pfeiles 38 entsprechend der Fig. 5 läßt sich die Tragstange 24 mit den daran gelenkig angebrachten Tragarmen 22 und 23 und damit auch der Deckel 21 anheben. Damit verbunden ist eine seitliche Verschiebung des Deckels 21 entsprechend der Schwenkung der Lenkhebel 25 und 26 um ihre gehäuseseitigen Lagerstellen 27 und 30. Am Ende des zum Öffnen des Deckels 21 erforderlichen Hubes tritt ein Rastbolzen 41 in eine ihm zugeordnete Ausnehmung 42 der Tragstange 24 ein. Dieser Rastbolzen ist in einer Bohrung des Widerlagers 37 gegen die Kraft einer Druckfeder 43 verschiebbar gelagert. Der Deckel 21 läßt sich nun von der Öffnung des Gehäuses wegschwenken. Gleichwertig mit der Lagerung des Rastbolzens 41 in dem Widerlager 37 ist seine Unterbringung in der Tragstange 24.

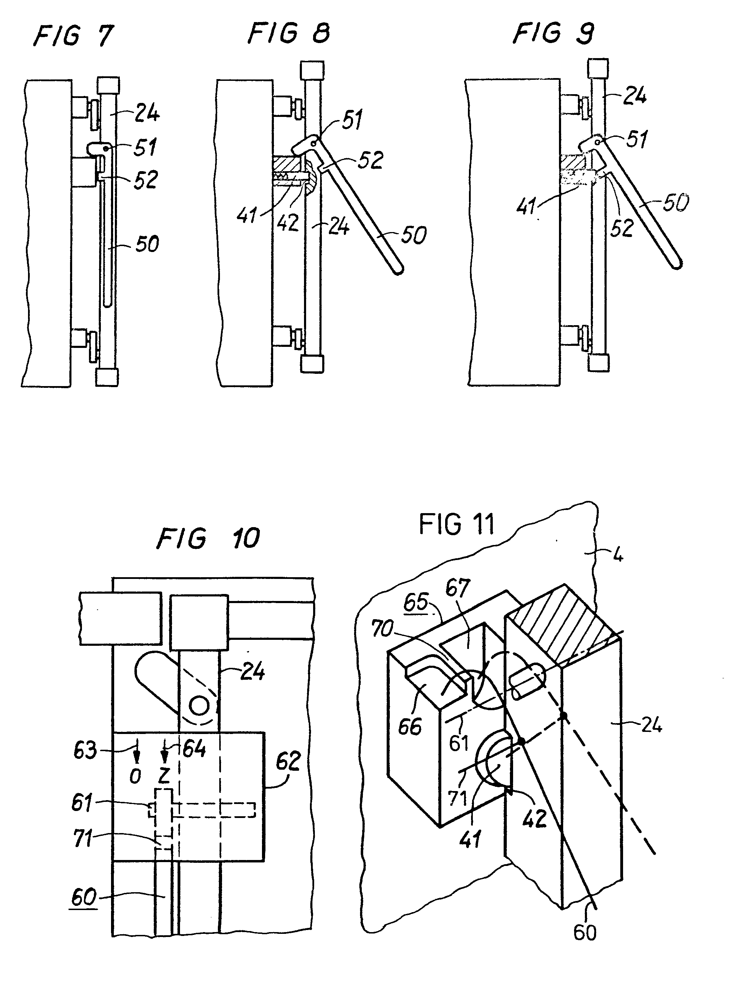

Zum Schließen wird der Deckel 21 zunächst wieder vor die Öffnung des Gehäuses 20 geschwenkt. Dann wird der in der Fig. 6 vergrößert gezeigte Auslösehebel 34 niedergedrückt, der an der Tragstange 24 mittels eines Lagerstiftes 44 schwenkbar gelagert ist. Ein Übertragungsbolzen 45 drückt dabei den Rastbolzen 41 entgegen der Wirkung der Feder 43 zurück, so daß er außer Eingriff mit der Ausnehmung 42 der Tragstange 24 gelangt. Die Tragstange 24 wird nun freigegeben und die gesamte bewegliche Anordnung aus Deckel, Schwenkarmen und Tragstange gelangt selbsttätig unter dem Einfluß der Schwerkraft in die Schließstellung.

Eine weitere Ausführungsform eines Betätigungshebels entsprechend den Fig. 7 bis 9 ermöglicht das Öffnen und Schließen mit einem einzigen Organ, d. h. unter Fortfall eines Auslösehebels der soeben beschriebenen Art. Hierzu trägt der Betätigungshebel 50 in Fig. 7 unterhalb seines an der Tragstange 24 befindlichen Schwenklagers 51 eine Nase 52, die dem Rastbolzen 41 in der geöffneten Stellung des Deckels gegenübersteht (Fig. 8). Durch Niederdrücken des Betätigungshebels 50 (Fig. 9) wird der Rastbolzen 41 durch die Nase 52 aus der Ausnehmung der Tragstange 24 verdrängt, so daß diese freigegeben wird und der Deckel selbsttätig in die Schließstellung gelangt. Voraussetzung für diese Wirkungsweise ist eine solche Anordnung des Rastbolzens 41 und der Ausnehmung 42, daß eine Teilfläche des Rastbolzens 41 am Rande der Tragstange 24 vorsteht. Hinsichtlich der zweiarmigen Ausführung entspricht der Betätigungshebel 50 dem anhand der Fig. 3 bis 5 erläuterten Betätigungshebel 33.

Durch eine Weiterbildung der in den Fig. 7 bis 9 gezeigten Betätigungseinrichtung des Deckels entsprechend den Fig. 10 und 11 läßt sich erreichen, daß eine unbeabsichtigte Absenkung der Tragstange 24 unterbleibt. Hierzu ist der Betätigungshebel 60 in der Fig. 10 auf einem verlängert ausgeführten Lagerbolzen 61 relativ zu der Tragstange 24 verschiebbar angeordnet, so daß er zum Öffnen und zum Schließen des Deckels durch Parallelverschiebung unterschiedliche Stellungen einnehmen kann. Auf einem in Fig. 10 erkennbaren, an der Tragstange 24 befestigten Schutzblech 62 sind diese Lagen durch Pfeile 63 für das Öffnen und 64 für das Schließen des Deckels angedeutet.

Im Zusammenhang mit der seitlichen Verschiebbarkeit des Betätigungshebels 60 steht die Ausführung des Widerlagers 65, welches sich hinter dem Schutzblech 62 befindet und das in der Figur 11 in vergrößerter Darstellung perspektivisch gezeigt ist. Der Lagerbolzen 61 ist abgebrochen gezeigt, jedoch ist seine Erstreckung durch eine strichpunktierte Mittellinie angedeutet. Wie man erkennt, befindet sich an der Oberseite des Widerlagers 65 eine Ausnehmung 66, die von einer benachbarten weiteren Ausnehmung 67 durch eine als Anschlag wirkende Rippe 70 getrennt ist. In die Ausnehmung 66 tritt der kürzere Hebelarm des schematisch durch eine ausgezogene Linie dargestellten Betätigungshebels 60 ein, wenn der Deckel des Gehäuses geöffnet werden soll. Wie schon erläutert, tritt hierbei eine seitliche Verschiebung und Anhebung der Tragstange 24 auf, an der jedoch der Betätigungshebel 60 nicht teilnehmen kann, weil die Rippe 70 die Mitnahme des Betätigungshebels 60 verhindert. Dabei kommt es zu einer relativen Verschiebung zwischen dem Betätigungshebel 60 und dem Lagerbolzen 61. Sobald die Tragstange 24 ihre Endstellung erreicht hat, tritt der Rastbolzen 41 in die zugehörige Ausnehmung 42 der Tragstange 24 ein und entlastet dadurch den Betätigungshebel 60. Beim Loslassen kehrt dieser in seine Ausgangsstellung zurück.

Im Unterschied zu dem Ausführungsbeispiel gemäß den Figuren 7 und 9 läßt sich nun der Deckel durch Niederdrücken des Betätigungshebels 60 nicht schließen, weil seine Nase 71 nicht auf den Rastbolzen 41 treffen kann. Dies ist erst dann möglich, wenn der Betätigungshebel 60 durch seitliche Verschiebung in die in Figur 11 gezeigte gestrichelte Stellung gebracht worden ist, entsprechend der Lage gemäß dem Pfeil 64 in Figur 10. Der kürzere Hebelarm des Betätigungshebels 60 gelangt hierbei in die Ausnehmung 67 des Widerlagers 65, während die Nase 71 auf den Rastbolzen 41 gelangt. Wird der Betätigungshebel 60 nun niedergedrückt, so kommt es zu dem bereits anhand der Figur 9 beschriebenen Schließvorgang.

In allen beschriebenen Ausführungsbeispielen wird der Deckel des druckfesten Gehäuses nach Freigabe eines Rastbolzens unter Ausnutzung der Schwerkraft geschlossen. Wegen des beträchtlichen Gewichtes der Deckel ist dadurch ein sicherer Verschluß gewährleistet. Prinzipiell möglich ist jedoch ein Öffnen des Deckels durch eine nach unten gerichtete Verschiebung in Verbindung mit sinngemäß umgekehrter Anordnung der Verschlußschienen und der Lenkhebel.

**Patentansprüche**

1. Druckfestes Gehäuse (1) von quaderförmiger Gestalt zur schlagwetter- oder explosionssicheren Kapselung elektrischer Geräte, mit einer rechteckigen Öffnung (5) und einem gleichfalls rechteckigen, an Schwenkarmen (22, 23) verschiebbar und schwenkbar gehaltenen Deckel (11), wobei am Rand des Deckels (11) und am Rand der Öffnung (5) Verschlußelemente mit korrespondierendem Profil angebracht sind, die sich zur Verriegelung des Deckels in der Schließstellung bei seiner Verschiebung an allen vier Seitenkanten annähernd gleichzeitig hintergreifen, dadurch gekennzeichnet, daß jeweils zwei rechtwinklig zueinander stehende, schienenförmige Verschlußelemente (8, 10 ; 13, 14) von einem Eckpunkt der Öffnung (5) und einem diesem Eckpunkt diagonal gegenüberliegenden Eckpunkt des Deckels (11) ausgehend angeordnet sind, derart, daß die Verriegelung des Deckels (11) durch entweder diagonale oder in der Summe ihrer Teilbewegungen diagonale Verschiebung erfolgt.

2. Gehäuse nach Anspruch 1, dadurch gekennzeichnet, daß an der Öffnung (5) und an dem Deckel (11) jeweils ein aus Leisten gebildeter Rahmen (6, 12) angeordnet ist und daß die schienenförmigen Verschlußelemente (8, 10 ; 13, 14) ein U-förmiges Profil zum Übergreifen der Leisten der Rahmen (6, 12) aufweisen.

3. Gehäuse nach Anspruch 1, dadurch gekennzeichnet, daß die Schwenkarme (22, 23) an einer gemeinsamen Tragstange (24) gelagert sind, die über Lenkhebel (25, 26) mit dem Gehäuse verbunden sind, und daß die Tragstange (24) durch einen Betätigungshebel (33) unter gleichzeitiger Verschiebung anhebbar ist.

4. Gehäuse nach Anspruch 3, dadurch gekennzeichnet, daß die Tragstange (24) der Schwenkarme (22, 23) eine Ausnehmung für das Eingreifen eines an dem Gehäuse (1) gelagerten und gegen die Kraft einer Feder (43) verschiebbaren Rastbolzens (41) besitzt.

5. Gehäuse nach Anspruch 3, dadurch gekennzeichnet, daß der Betätigungshebel (33) an der Tragstange (24) gelagert und als Winkelhebel ausgebildet ist, dessen einer Hebelarm (36) kurz gegenüber dem anderen von Hand zu bedienenden Hebelarm (40) ist und mit einem gehäuseseitigen Widerlager (37) zusammenwirkt.

6. Gehäuse nach Anspruch 3, dadurch gekennzeichnet, daß an der Tragstange (24) zusätzlich ein von Hand zu bedienender Auslösehebel (34) gelagert ist, der eine Verschiebung des Rastbolzens (41) entgegen der diesem zugeordneten Feder (43) erlaubt.

7. Gehäuse nach Anspruch 4, dadurch gekennzeichnet, daß der Betätigungshebel (50) eine Nase (52) besitzt, die in der angehobenen, der Offenstellung des Deckels entsprechenden Lage des Betätigungshebels (50) dem Rastbolzen (41) gegenübersteht.

8. Gehäuse nach Anspruch 5, dadurch gekennzeichnet, daß der Betätigungshebel (60) an seiner an der Tragstange (24) befindlichen Lagerstelle (61) um mindestens den beim Öffnen und Schließen auftretenden seitlichen Versatz der Tragstange (24) verschiebbar ist und daß das gehäuseseitige Widerlager (65) einen die Mitnahme des Betätigungshebels (60) beim Öffnen begrenzenden Anschlag (70) besitzt.

**Claims**

1. A pressure-resistant housing (1) of parallelepiped shape for the flame- or explosion-proof encapsulation of electrical devices, having a rectangular opening (5) and likewise a rectangular cover (11) which is displaceably and pivotably held on swivel arms (22, 23), wherein sealing elements having a corresponding profile are fixed on the edge of the cover (11) and on the edge of the opening (5), which sealing elements, in order to seal the cover, in the closing position engage behind one another approximately simultaneously during its displacement at all four lateral edges, characterised in that in each case, two rail-shaped sealing elements (8, 10 ; 13, 14) are arranged at right angles to one another, starting from a corner point of the opening (5) and from a corner point of the cover (11) which lies diagonally opposite said corner point, in such a way that the locking of the cover (11) is effected by a displacement which is either diagonal or is diagonal in the sum of its partial movements.

2. A housing as claimed in Claim 1, characterised in that a respective frame (6, 12) formed from strips is arranged at the opening (5) and at the cover (11), and that the rail-shaped sealing elements (8, 10 ; 13, 14) have a U-shaped profile for engaging over the strips of the frames (6, 12).

3. A housing as claimed in Claim 1, characterised in that the swivel arms (22, 23) are mounted on a common supporting rod (24) which is connected to the housing by guide levers (25, 26), and that the supporting rod (24) can be lifted by an operating lever (33) during simultaneous displacement.

4. A housing as claimed in Claim 3, characterised in that the supporting rod (24) of the swivel arms (22, 23) has an aperture for the engagement of a locking bolt (41) which is mounted on the housing (1) and displaceable against the force of a spring (43).

5. A housing as claimed in Claim 3, characterised in that the operating lever (33) is mounted on the supporting rod (24) and is formed as an angled lever, one lever arm (36) of which is short in relation to the other lever arm (40), which is manually operable, and which one lever arm cooperates with an abutment (37) at the side of the housing.

6. A housing as claimed in Claim 3, characterised in that a manually operable trigger lever (34) is additionally mounted on the supporting rod (24) and allows a displacement of the locking bolt (41) against the spring (43) assigned thereto.

7. A housing as claimed in Claim 4, characterised in that the operating lever (50) has a projection (52) which is opposite the locking bolt (41) in the raised position of the operating lever (50) which corresponds to the open position of the cover.

8. A housing as claimed in Claim 5, characterised in that at its bearing point (61) on the supporting rod (24), the operating lever (60) is displaceable by at least the lateral displacement of the supporting rod (24) which occurs during opening and closing, and that the abutment (65) at the side of the housing has a stop (70) which limits the movement of the operating lever (60) during opening.

**Revendications**

1. Coffret (1) à l'épreuve de la pression, de forme parallélépipédique, pour le blindage anti-grisouteux ou antidéflagrant d'appareils électriques, possédant une ouverture rectangulaire (5) et un couvercle (11), également rectangulaire, qui est supporté mobile transversalement dans le sens d'un coulissement et pivotant sur des bras pivotants (22, 23), des éléments de fermeture à profils correspondants étant disposés au bord du couvercle (11) et au bord de l'ouverture (5) et s'accrochant à peu près simultanément l'un derrière l'autre sur les quatre côtés au déplacement transversal du couvercle en vue de son verrouillage à la position de fermeture, caractérisée en ce que deux éléments de fermeture en forme de rails (8, 10) sont disposés de manière à s'étendre à angle droit l'un par rapport à l'autre à partir d'un angle de l'ouverture (5) et deux éléments de fermeture en forme de rails (13, 14) sont disposés de manière à s'étendre à angle droit l'un par rapport à l'autre à partir d'un angle diagonalement opposé du couvercle (11), de telle sorte que le verrouillage du couvercle (11) est produit, soit par le déplacement diagonal du couvercle, soit par des déplacements partiels du couvercle, dont la somme est orientée suivant une diagonale.

2. Coffret selon la revendication 1, caractérisée en ce qu'elle comprend deux cadres (6, 12) formés de barrettes et disposés l'un autour de l'ouverture (5) et l'autre sur le couvercle (11) et que les éléments de fermeture en forme de rails (8, 10 ; 13, 14) présentent un profil en U destiné à s'emboîter sur les barrettes des cadres (6, 12).

3. Coffret selon la revendication 1, caractérisée en ce que les bras pivotants (22, 23) sont montés sur une barre de support commune (24) qui est reliée à l'enveloppe par des biellettes (25, 26) et que la barre de support (24) peut être soulevée par un levier de manœuvre (33), ce qui produit en même temps le déplacement transversal de la barre de support.

4. Coffret selon la revendication 3, caractérisée en ce que la barre de support (24) des bras pivotants (22, 23) présente un évidement pour la pénétration d'une cheville d'arrêt (41) montée sur le coffret (1) et pouvant être repoussée contre la force du ressort (43).

5. Coffret selon la revendication 3, caractérisée en ce que le levier de manœuvre (33) est monté sur la barre de support (24) et est réalisé comme un levier coudé dont un bras (36) est court par rapport à l'autre bras (40), lequel est à manœuvrer à la main, le bras court coopérant avec un appui (37) sur l'enveloppe.

6. Coffret selon la revendication 3, caractérisée en ce qu'un levier de déverrouillage (34), manœuvrable à la main, est monté en plus sur la barre de support (24), ce levier permettant de repousser la cheville d'arrêt (41) contre le ressort (43) associé à cette cheville.

7. Coffret selon la revendication 4, caractérisée en ce que le levier de manœuvre (50) possède un nez (52) qui est situé en regard de la cheville d'arrêt (41) à la position soulevée du levier de manœuvre (50), correspondant à la position d'ouverture du couvercle.

8. Coffret selon la revendication 5, caractérisée en ce que le levier de manœuvre (60) est déplaçable, à son point de rotation (61) sur la barre de support (24), d'une quantité qui correspond au moins au décalage latéral de la barre de support (24) à l'ouverture et la fermeture et en ce que l'appui (65) prévu sur le coffret possède une butée (70) qui limite l'entraînement du levier de manœuvre (60) à l'ouverture.

FIG 1

FIG 2

FIG 3

22    21    20

27

25

31

A    33

34

30    32

26

24

23

FIG 4

25

36

35

34

37

20    33

40

38

24

26

FIG 5

A

43

41

38

24

FIG 6

44    24

35

43

41

42    45

34

FIG 7

FIG 8

FIG 9

FIG 10

FIG 11